# EUROPÄISCHE PATENTANMELDUNG

(11) **EP 1 574 483 A2**
(43) Veröffentlichungstag der Anmeldung: **14.09.2005**
(21) Anmeldenummer: 05000442.3
(22) Anmeldetag: 12.01.2005
(51) Int. Cl.: C03B 9/453

(54) **Vorrichtung zum Überschieben von Hohlglasgegenständen aus einer Glasformmaschine auf ein Transportband**

(30) Priorität: 12.03.2004 DE 202004003892 U
(71) Anmelder: Heye International GmbH, 31683 Obernkirchen (DE)
(72) Erfinder: Hoffmann, Michael, 31715 Meerbeck (DE); Schwarzer, Siegfried, 31638 Stöckse (DE); Winkelhake, Dirk, 31688 Nienstädt (DE); Bögert, Hermann, 31749 Auetal (DE)
(74) Vertreter: Sobisch, Peter

(57) **Zusammenfassung**

Eine zum waagerechten Überschieben wenigstens eines Hohlglasgegenstands von einer Absetzplatte jeder Sektion einer I.S. (Individual Section)-Glasformmaschine auf ein allen Sektionen gemeinsames Transportband ist durch einen Überschieber (30) gekennzeichnet, der über eine Tragstange (42) mit einem Führungsstück (35) in Verbindung steht, welches entlang zweier, zueinander paralleler, voneinander beabstandeter, sich horizontal erstreckender in einem Gehäuse (13) angeordneter Führungsstangen (36) verschiebbar ist. Mit einer Nut (34) des Führungsstücks, die sich senkrecht zu den beiden Führungsstangen (36) erstreckt, steht eine an dem einen Ende einer Kurbel (28) angeordnete, frei drehbare Rolle (32) im Eingriff, wobei die Kurbel (28) um eine Achse (8) drehbar ist, die sich parallel zu der Achse der Rolle (32) erstreckt. Das Gehäuse (13) ist zu diesem Zweck über eine sich koaxial zu der Achse (8) erstreckende Hohlwelle (9) gelagert, innerhalb welcher eine, die Kurbel (28) antreibende Welle (11) wiederum gelagert ist und mit einer Antriebseinheit (22) in Wirkverbindung steht. Die Antriebseinheit (22) dient somit über die Kurbel (28) und das Führungsstück (35) der Verschiebung des Überschiebers (30) in Längsrichtung der Tragstange (42), wohingegen eine weitere Antriebseinheit (14) die mit der Hohlwelle (9) in Antriebsverbindung steht, zur Drehung des Überschiebers (30) um die Achse (8) bestimmt ist. Die Vorrichtung beansprucht ein außerordentlich geringes Bauvolumen und zeichnet sich durch einen konstruktiv einfachen Aufbau aus.

## Beschreibung

Die Erfindung betrifft eine Vorrichtung nach dem Oberbegriff des Anspruchs 1.

Bei einer bekannten Vorrichtung dieser Art (CZ 288 848 B6) wird dem Überschieber durch eine erste Antriebseinheit eine hin und her schwenkende Bewegung erteilt. Außerdem ist eine zweite Antriebseinheit vorgesehen, deren Abtriebswelle ständig in derselben Richtung umläuft und über ein als Parallelogramm ausgebildetes Paar von Kurbeln dem Überschieber seine hin und her gehende radiale Bewegung in und außer Berührung mit den Hohlglasgegenständen erteilt. Diese Vorrichtung ist baulich aufwändig. Die Einrichtung zur waagerechten linearen Hin- und Herbewegung des Überschiebers beansprucht viel Raum und hat eine ungünstig große, periodisch zu beschleunigende und zu verzögernde Masse.

Der Erfindung liegt die Aufgabe zugrunde, die Einrichtung zur waagerechten linearen Hin- und Herbewegung des Überschiebers zu vereinfachen und betriebssicherer zu gestalten.

Diese Aufgabe ist durch die Merkmale des Anspruchs 1 gelöst. Die Einrichtung zur waagerechten linearen Hin- und Herbewegung des Überschiebers beansprucht wenig Raum, ist stabil und lässt sich durch die zugehörige zweite Antriebseinheit feinfühlig betätigen.

Die Merkmale des Anspruchs 2 sind baulich besonders einfach.

Gemäß Anspruch 3 erhält man eine sehr präzise Führung des Führungsstücks bei seiner Linearbewegung.

Gemäß Anspruch 4 können bei Bedarf auch zwei zueinander parallele Tragstangen eingesetzt werden.

Die Merkmale des Anspruchs sorgen für eine präzise Führung der wenigstens einen Tragstange während ihrer Linearbewegung.

Die Elektroservomotoren gemäß Anspruch 6 ermöglichen eine sehr präzise und reproduzierbare Linear- und Schwenkbewegung des Überschiebers.

Die Zahnriemengetriebe gemäß Anspruch 7 sind anderweitig bewährte Bauelemente und erlauben eine schlupffreie Drehmomentübertragung.

Gemäß Anspruch 8 lässt sich die Spannung des Zahnriemens auf einfache Weise einstellen.

Diese und weitere Merkmale und Vorteile der Erfindung werden nachfolgend anhand des in den Zeichnungen dargestellten Ausführungsbeispiels näher erläutert. Es zeigt
Fig. 1 einen Längsschnitt durch eine Vorrichtung,
Fig. 2 im Wesentlichen die teilweise geschnittene Ansicht gemäß Linie II-II in Fig. 1 und
Fig. 3 im Wesentlichen die Schnittansicht nach Linie III-III in Fig. 2.

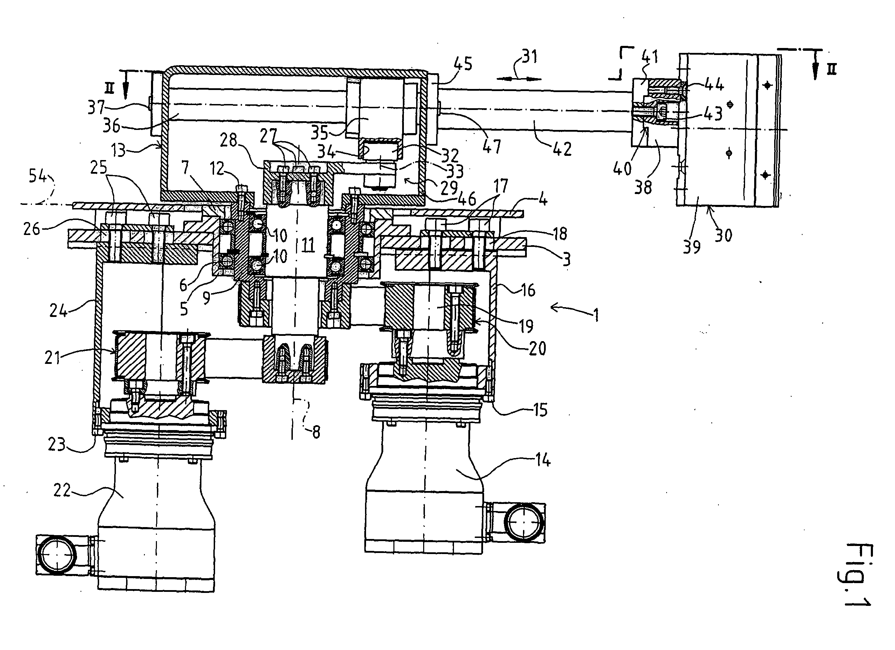

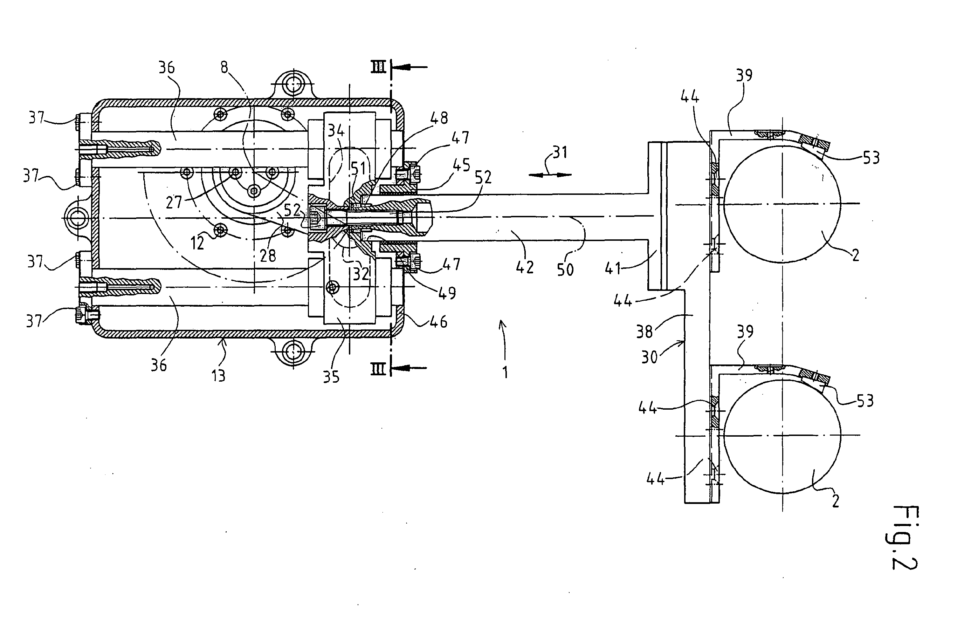

Fig. 1 zeigt eine Vorrichtung 1 zum Überschieben von Hohlglasgegenständen 2 (Fig. 2) von einer nicht gezeichneten Absetzplatte einer Sektion einer I.S. (Individual Section)-Glasformmaschine auf ein allen Sektionen gemeinsames Transportband. Solche Vorrichtungen sind an sich bekannt und brauchen in ihren konstruktiven Details deshalb hier nicht im Einzelnen erläutert zu werden.

Die Vorrichtung 1 weist gemäß Fig. 1 ein maschinenfest montiertes plattenförmiges Bauteil 3 auf. Oberhalb des Bauteils 3 ist eine Abdeckplatte 4 angeordnet, die mit dem Bauteil 3 verschraubt ist. In eine zentrale Bohrung des Bauteils 3 ist eine Lagerbuchse 5 eingesetzt und durch nicht gezeichnete Schrauben mit dem Bauteil 3 verschraubt. In die Lagerbuchse 5 sind zwei Wälzlager 6 eingesetzt, die oben durch einen Deckring 7 gesichert sind. Der Deckring 7 ist durch nicht gezeichnete Schrauben an der Lagerbuchse 5 festgelegt.

In den beiden Wälzlagern 6 ist eine um eine senkrechte erste Längsachse 8 schwenkbare Hohlwelle 9 gelagert. In der Hohlwelle 9 ist über zwei Wälzlager 10 eine Welle 11 um die erste Längsachse 8 drehbar gelagert.

Oben auf der Hohlwelle 9 ist durch Schrauben 12 ein Gehäuse 13 befestigt, das oberhalb der Abdeckplatte 4 angeordnet ist.

Eine erste Antriebseinheit 14 ist durch Schrauben 15 unten an einer ersten Halterung 16 befestigt. Die erste Halterung 16 ist mit Schrauben 17 gegen eine Unterseite des Bauteils 3 gezogen. Jede Schraube 17 durchdringt ein Langloch 18 des Bauteils 3, das sich in Richtung der ersten Längsachse 8 erstreckt. Eine Abtriebswelle 19 der ersten Antriebseinheit 14 ist über ein als Zahnriemengetriebe ausgebildetes erstes Getriebe 20 mit der Hohlwelle 9 verbunden.

Die Welle 11 ist über ein als Zahnriemengetriebe ausgebildetes zweites Getriebe 21 durch eine zweite Antriebseinheit 22 drehend antreibbar. Die zweite Antriebseinheit 22 ist durch Schrauben 23 unten an einer zweiten Halterung 24 befestigt. Die zweite Halterung 24 ist wiederum durch Schrauben 25 und zugehörige Langlöcher 26 in dem Bauteil 3 relativ zu der ersten Längsachse 8 einstellbar festgelegt.

Wenn bei jeder der Antriebseinheiten 14 oder 22 die Spannung des Zahnriemens des zugehörigen Getriebes 20 oder 21 eingestellt werden soll, werden die zugehörigen Schrauben 17 oder 25 gelockert und die zugehörige Halterung 16 oder 24 bezüglich der ersten Längsachse 8 radial nach außen verschoben, bis die gewünschte Riemenspannung erreicht ist. Sodann werden die Schrauben 17 oder 25 wieder festgezogen.

Mit einem oberen Ende der Welle 11 ist durch Schrauben 27 eine Kurbel 28 einer Einrichtung 29 verschraubt. Die Einrichtung 29 ist im Wesentlichen innerhalb des Gehäuses 13 angeordnet und dient dazu, einem Überschieber 30 eine waagerechte lineare Hin- und Herbewegung in den Richtungen eines Doppelpfeils 31 zu erteilen. An einem freien Ende der Kurbel 28 ist eine Rolle 32 mit einer senkrechten zweiten Längsachse 33 frei drehbar gelagert. Die Rolle 32 greift mit Gleitpassung in eine sich quer zu den Richtungen 31 der Hin- und Herbewegung des Überschiebers 30 erstreckenden Nut 34 in einem Führungsstück 35 der Einrichtung 29 ein. Das Führungsstück 35 ist auf zwei im Abstand voneinander und parallel zueinander angeordneten Führungsstangen 36 in den Richtungen 31 der Hin- und Herbewegung des Überschiebers 30 verschiebbar. Die Führungsstangen 36 sind mit Schrauben 37 an dem Gehäuse 13 festgelegt (vgl. auch Fig. 2).

Aus einer Zusammenschau der Fig. 1 und 2 wird deutlich, dass der Überschieber 30 ein Basisteil 38 und für jeden überzuschiebenden Hohlglasgegenstand 2 einen sich quer von dem Basisteil 38 erstreckenden Schubfinger 39 aufweist. Das Basisteil 38 ist über eine Nut/Federverbindung 40 formschlüssig mit einer Anschlussplatte 41 einer Tragstange 42 verbunden. Diese Verbindung ist durch Schrauben 43 gesichert. Jeder Schubfinger 39 ist durch Schrauben 44 lösbar an dem Basisteil 38 befestigt.

Die Tragstange ist kreisrund und gleitet in den Richtungen 31 in einer Lagerbuchse 45, die in eine Bohrung in einer Seitenwand 46 des Gehäuses 13 eingesetzt und dort mit Schrauben 47 gehalten ist.

An ihrem in den Fig. 1 und 2 linken Ende sind an die Tragstange 42 zwei diametral gegenüberliegende Flächen 48 angearbeitet. Die Tragstange 42 greift mit ihrem Ende und den Flächen 48 in eine komplementär ausgebildete Ausnehmung 49 des Führungsstücks 35 ein. Dadurch ist formschlüssig verhindert, dass sich die Tragstange 42 um ihre Längsachse 50 relativ zu dem Führungsstück 35 drehen kann. An das linke Ende der Tragstange 42 ist noch ein Zentrierzapfen 51 kleineren Durchmessers als die Tragstange 42 angearbeitet. Der Zentrierzapfen 51 greift in eine komplementäre Zentrierbohrung des Führungsstücks 35 ein und unterstützt eine einwandfreie Positionierung der Tragstange 42 relativ zu dem Führungsstück 35. Die Tragstange 42 wird durch eine mittige Schraube 52 axial in ihren Sitz in dem Führungstück 35 gezogen.

In Fig. 1 ist eine Oberkante 54 des Transportbands mit einer strichpunktierten Linie angedeutet.

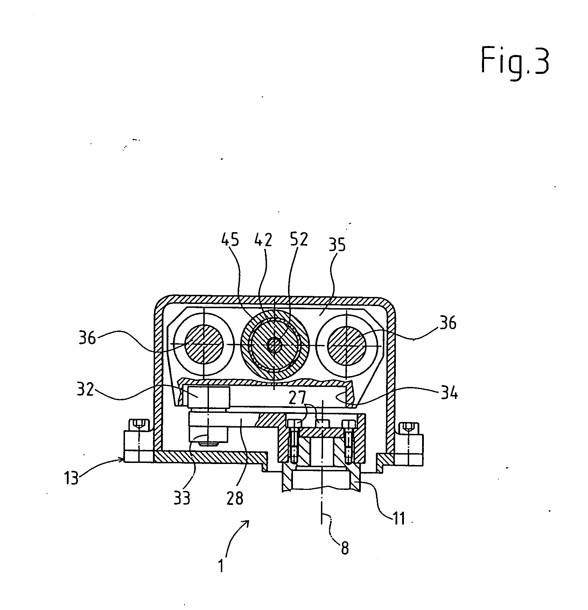

Fig. 3 zeigt weitere Einzelheiten der Vorrichtung 1 im Querschnitt.

Die Funktion der Vorrichtung 1 ist wie folgt:

In einer Ausgangsstellung stehen die gerade in der zugehörigen Sektion der I.S.-Glasformmaschine hergestellten Hohlglasgegenstände 2 auf der in Fig. 2 nicht gezeichneten Absetzplatte. Der Überschieber 30 befindet sich außer Eingriff mit den Hohlglasgegenständen 2 weiter links als in Fig. 2 gezeichnet. Der Überschiebezyklus beginnt damit, dass der Überschieber 30 aus dieser seiner Ausgangsstellung in eine Arbeitsstellung geschoben wird, in welcher die Schubfinger 39 jeweils hinter einem der Hohlglasgegenstände 2 angeordnet sind. Sodann wird die Vorrichtung 1 um die erste Längsachse 8 geschwenkt. Dabei treten sehr schnell freie Enden 53 der Schubfinger 39 in Berührung mit den Hohlglasgegenständen 2. Nachfolgend werden die Hohlglasgegenstände 2 durch die Schubfinger 39 üblicherweise mindestens entlang eines Viertelkreises von der Absetzplatte auf das in Fig. 2 nicht gezeichnete Transportband übergeschoben. Anschließend wird der Überschieber 30 wieder in seine vorerwähnte Ausgangsstellung zurückgezogen, wobei sich die Schubfinger 39 von den Hohlglasgegenständen 2 entfernen. Die Vorrichtung 1 wird schließlich um die erste Längsachse 8 wieder in ihre in Fig. 2 gezeichnete Ausgangsstellung zurückgeschwenkt.

## Patentansprüche

1. Vorrichtung (1) zum Überschieben wenigstens eines Hohlglasgegenstands (2) von einer Absetzplatte jeder Sektion einer I.S. (Individual Section)-Glas-formmaschine auf ein allen Sektionen gemeinsames Transportband,
mit einem Überschieber (30), der ein Basisteil (38) und für jeden überzuschiebenden Hohlglasgegenstand (2) wenigstens einen, sich quer von dem Basisteil (38) erstreckenden Schubfinger (39) aufweist,
mit einer maschinenfest angeordneten ersten Antriebseinheit (14), durch die über ein erstes Getriebe (20) eine maschinenfest drehbar gelagerte Hohlwelle (9) mit einer senkrechten ersten Längsachse (8) hin und her drehend antreibbar ist,
wobei mit der Hohlwelle (9) ein Gehäuse (13) verbunden ist,
wobei das Gehäuse (13) eine Einrichtung (29) zur waagerechten linearen Hin- und Herbewegung des Überschiebers (30) aufweist,
und wobei eine die Einrichtung (29) antreibende Welle (11) konzentrisch zu der ersten Längsachse (8) innerhalb der Hohlwelle (9) drehbar gelagert ist und die Hohlwelle (9) durchdringt, und die Welle (11) über ein zweites Getriebe (21) durch eine maschinenfest angeordnete zweite Antriebseinheit (22) drehend antreibbar ist,
**dadurch gekennzeichnet, dass** mit der Welle (11) eine sich in das Gehäuse (13) erstreckende Kurbel (28) der Einrichtung (29) verbunden ist,
dass an einem freien Ende der Kurbel (28) eine Rolle (32) mit einer senkrechten zweiten Längsachse (33) frei drehbar gelagert ist,
dass die Rolle (32) mit Gleitpassung in eine sich quer zu den Richtungen (31) der Hin- und Herbewegung des Überschiebers (30) erstreckende Nut (34) in einem Führungsstück (35) der Einrichtung (29) eingreift,
dass das Führungsstück (35) auf wenigstens einer an dem Gehäuse (13) festgelegten Führungsstange (36) in den Richtungen (31) der Hin- und Herbewegung des Überschiebers (30) verschiebbar ist,
und dass an dem Führungsstück (35) wenigstens eine den Überschieber (30) tragende Tragstange (42) befestigt ist.

2. Vorrichtung nach Anspruch 1,
**dadurch gekennzeichnet**, das die Nut (34) gerade ausgebildet ist.

3. Vorrichtung nach Anspruch 1 oder 2,
**dadurch gekennzeichnet, dass** zwei im Abstand voneinander und parallel zueinander angeordnete Führungsstangen (36) vorgesehen sind.

4. Vorrichtung nach einem der Ansprüche 1 bis 3,
**dadurch gekennzeichnet, dass** zwei im Abstand voneinander und parallel zueinander angeordnete Tragstangen vorgesehen sind.

5. Vorrichtung nach einem der Ansprüche 1 bis 4,
**dadurch gekennzeichnet, dass** jede Tragstange (42) in einer Wand (46) des Gehäuses (13) verschiebbar gelagert (45) ist.

6. Vorrichtung nach einem der Ansprüche 1 bis 5,
**dadurch gekennzeichnet, dass** jede Antriebseinheit (14;22) einen Elektroservomotor aufweist.

7. Vorrichtung nach einem der Ansprüche 1 bis 6,
**dadurch gekennzeichnet, dass** jedes Getriebe (20;21) als Zahnriemengetriebe ausgebildet ist.

8. Vorrichtung nach Anspruch 7,
**dadurch gekennzeichnet, dass** zur Einstellung der Spannung eines Zahnriemens jedes Zahnriemengetriebes (20;21) eine Halterung (16;24) jeder Antriebseinheit (14;22) in einer Längsrichtung des Zahnriemens einstellbar an einem maschinenfesten Bauteil (3) befestigt ist.
